# EUROPEAN PATENT APPLICATION

(11) **EP 4 681 943 A1**
(43) Date of publication of application: **21.01.2026**
(21) Application number: 23937567.8
(22) Date of filing: 25.10.2023
(51) Int. Cl.: B60C 23/04, G06Q 50/10

(54) **TIRE MANAGEMENT DEVICE, PROGRAM, AND TIRE MANAGEMENT METHOD**

(30) Priority: 12.05.2023 JP 2023079620
(71) Applicant: BRIDGESTONE CORPORATION, Chuo-ku Tokyo 104-8340 (JP)
(72) Inventor: OKAZAKI, Naoto, Tokyo 104-8340 (JP); ONO, Takatoshi, Tokyo 104-8340 (JP); KASAI, Yusuke, Tokyo 104-8340 (JP); KARUBE, Takanori, Tokyo 104-8340 (JP); YAMADA, Kotaro, Tokyo 104-8340 (JP); ITO, Yujiro, Tokyo 104-8340 (JP)
(74) Representative: Marks & Clerk LLP
(86) International application number: PCT/JP2023/038592
(87) International publication number: WO 2024/236834

(57) **Abstract**

A tire management apparatus (10) is for managing a mounting state of tires having an embedded transmitter onto a vehicle and includes an acquisition interface (131) that acquires, via a reader (70), transmitter ID information read from the embedded transmitter in a work target tire, which is a target for work among the tires, and acquires a signal reception strength at a time of reading the transmitter ID information, a determination unit (132) that determines a mounting position of the work target tire on the vehicle based on the transmitter ID information and the signal reception strength, and generates mounting position information in which the transmitter ID information is associated with the mounting position, and an output interface (133) that outputs the mounting position information. Multiple pieces of the transmitter ID information and multiple signal reception strengths are acquired and read at different positions or times by the reader.

## Description

### TECHNICAL FIELD

The present disclosure relates to a tire management apparatus, a program, and a tire management method.

### BACKGROUND

In recent years, with the expansion of the use of retreaded tires and the like, technologies for grasping the deterioration state of tires have attracted attention. In order not to waste the cost of retreading, when performing retreading of a tire, it is necessary that the base tire retains sufficient durability to withstand use after retreading. In order to grasp the deterioration state of each tire and determine its durability, individual identification of the tire is required, and, for example, an electronic device such as a transmitter may be attached to the tire. For example, PTL 1, PTL 2, and PTL 3 disclose configurations in which a transceiver, a wheel information transmission device, or an RF transmission circuit is attached to a tire or wheel.

### CITATION LIST

### Patent Literature

PTL 1: JP 2010-71848 A
PTL 2: JP 2008-74223 A
PTL 3: JP 2014-231337 A

### SUMMARY

### (Technical Problem)

PTL 1, PTL 2, and PTL 3 illustrate configurations for acquiring information from each tire in a tire pressure monitoring system (TPMS: Tire Pressure Monitoring System). Here, tires may be partially or entirely replaced. When replacing a tire to which a transmitter is attached, in order to acquire accurate information in the system, it is necessary to update the identification information of the transmitter attached to the replacement tire in association with the replacement position on the vehicle. PTL 1, PTL 2, and PTL 3 do not describe such correspondence work regarding tire replacement.

For example, by having an operator who replaces the tire manually update the identification information of the transmitter in association with the replacement position on the vehicle, it is possible to continuously acquire information in the system. However, when targeting many vehicles or vehicles equipped with many tires, the operator's workload increases, and mistakes such as incorrect registration are likely to occur. Therefore, there is a demand for a method to support the operator's registration work and prevent errors.

In view of such circumstances, an object of the present disclosure is to provide a tire management apparatus, a program, and a tire management method that enable efficient replacement work of tires with embedded transmitters and can prevent registration errors.

### (Solution to Problem)

(1) A tire management apparatus according to one embodiment of the present disclosure is
   a tire management apparatus for managing a mounting state of tires having an embedded transmitter onto a vehicle, the tire management apparatus comprising:
   an acquisition interface configured to acquire, via a reader, transmitter ID information read from the embedded transmitter in a work target tire, the work target tire being a target for work among the tires, and a signal reception strength at a time of reading the transmitter ID information;
   a determination unit configured to determine a mounting position of the work target tire on the vehicle based on the transmitter ID information and the signal reception strength, and generate mounting position information in which the transmitter ID information is associated with the mounting position; and
   an output interface configured to output the mounting position information,
   wherein a plurality of pieces of the transmitter ID information and a plurality of the signal reception strengths are acquired and are read at different positions or at different times by the reader.
(2) In one embodiment of the present disclosure, in (1),
   the acquisition interface acquires vehicle data relating to the vehicle and including at least information on a wheel configuration, and
   the determination unit determines the mounting position of the work target tire based on the information on the wheel configuration.
(3) In one embodiment of the present disclosure, in (2),
   the determination unit switches, based on the information on the wheel configuration, between a first determination method for determining the mounting position based on a time when the signal reception strength exceeds a threshold or reaches a maximum, and a second determination method for determining the mounting position by comparison of maximum values of the signal reception strength in addition to the first determination method.
(4) In one embodiment of the present disclosure, in (2) or (3),
   in a case in which the number of the pieces of the transmitter ID information is greater than the number of wheels obtained from the information on the wheel configuration, the determination unit does not determine the mounting position for a portion of the pieces of the transmitter ID information based on a magnitude of the signal reception strength.
(5) In one embodiment of the present disclosure, in any one of (2) to (4),
   in a case in which the number of the pieces of the transmitter ID information is less than the number of wheels obtained from the information on the wheel configuration, the determination unit causes the output interface to output a warning.
(6) In one embodiment of the present disclosure, in any one of (2) to (5),
   the vehicle data, acquired by the acquisition interface, for the vehicle is specified based on a captured image of the vehicle, identification information input by an operator, or vehicle transmitter ID information read from a vehicle transmitter embedded in the vehicle.
(7) In one embodiment of the present disclosure, in any one of (1) to (6),
   the acquisition interface acquires reference transmitter ID information read from a reference transmitter provided at a specific position of the vehicle or near the specific position, and a reference signal reception strength at a time of reading the reference transmitter ID information,
   and the determination unit verifies the determined mounting position by comparing the signal reception strength of the work target tire and the reference signal reception strength.
(8) A program according to one embodiment of the present disclosure is configured to cause a tire management apparatus, which manages a mounting state of tires having an embedded transmitter onto a vehicle, to execute:
   acquiring, via a reader, transmitter ID information read from the embedded transmitter in a work target tire, the work target tire being a target for work among the tires, and a signal reception strength at a time of reading the transmitter ID information;
   determining a mounting position of the work target tire on the vehicle based on the transmitter ID information and the signal reception strength, and generating mounting position information in which the transmitter ID information is associated with the mounting position; and
   outputting the mounting position information,
   wherein a plurality of pieces of the transmitter ID information and a plurality of the signal reception strengths are acquired and are read at different positions or at different times by the reader.
(9) A tire management method according to one embodiment of the present disclosure is
   a tire management method for managing a mounting state of tires having an embedded transmitter onto a vehicle, the tire management method comprising:
   acquiring, via a reader, transmitter ID information read from the embedded transmitter in a work target tire, the work target tire being a target for work among the tires, and a signal reception strength at a time of reading the transmitter ID information;
   determining a mounting position of the work target tire on the vehicle based on the transmitter ID information and the signal reception strength, and generating mounting position information in which the transmitter ID information is associated with the mounting position; and
   outputting the mounting position information,
   wherein a plurality of pieces of the transmitter ID information and a plurality of the signal reception strengths are acquired and are read at different positions or at different times by the reader.

### (Advantageous Effect)

According to the present disclosure, it is possible to provide a tire management apparatus, a program, and a tire management method that enable efficient replacement work of tires with embedded transmitters and can prevent registration errors.

### BRIEF DESCRIPTION OF THE DRAWINGS

In the accompanying drawings:
FIG. 1 is a diagram illustrating an example configuration of a tire management apparatus according to one embodiment of the present disclosure;
FIG. 2 is a diagram illustrating an example configuration of a tire management system including the tire management apparatus of FIG. 1;
FIG. 3 is a diagram for explaining transmitter ID information and signal reception strength;
FIG. 4 is a diagram illustrating an example of a method in which the reader reads transmitter ID information from the transmitter at different positions or at different times;
FIG. 5 is a diagram exemplifying changes in signal reception strength in the reading method of FIG. 4;
FIG. 6 is a diagram illustrating another example of a method in which the reader reads transmitter ID information from the transmitter at different positions or at different times;
FIG. 7 is a diagram exemplifying changes in signal reception strength in the reading method of FIG. 6; and
FIG. 8 is a flowchart exemplifying processing of the tire management method executed by the tire management apparatus.

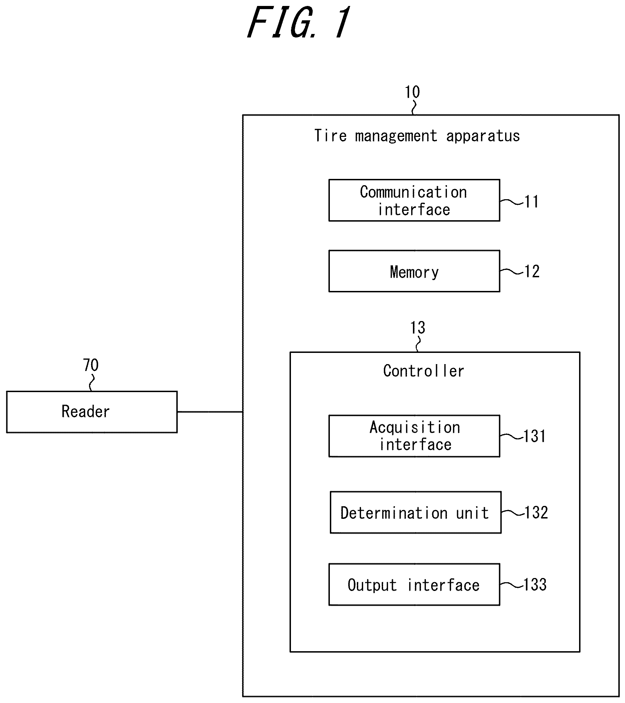

Hereinafter, a tire management apparatus 10 (see FIG. 1), a program, and a tire management method according to one embodiment of the present disclosure will be described with reference to the drawings. In each drawing, the same or corresponding parts are denoted by the same reference numerals. In the description of the present embodiment, explanations of the same or corresponding parts may be omitted or simplified as appropriate.

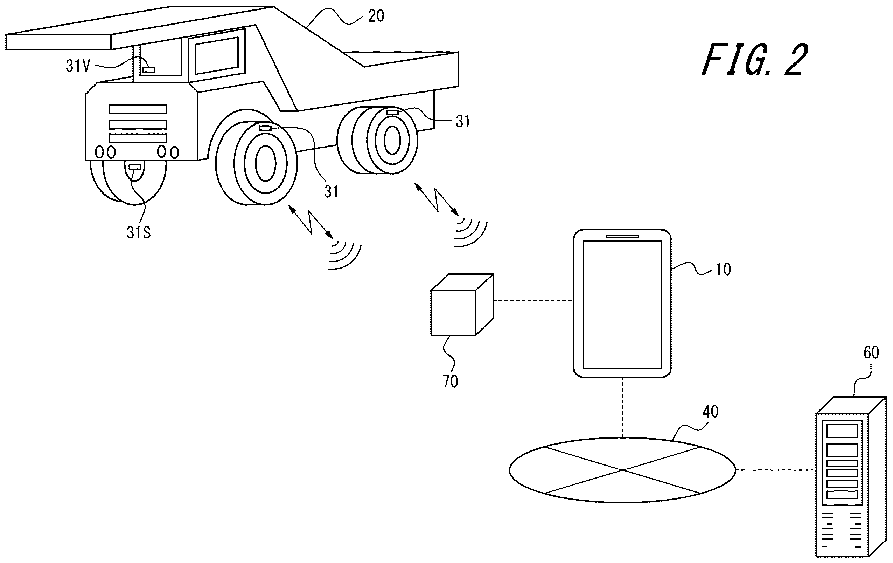

FIG. 1 illustrates an example configuration of the tire management apparatus 10 according to the present embodiment. FIG. 2 illustrates an example configuration of a tire management system including the tire management apparatus 10 of FIG. 1. The tire management apparatus 10 manages tires mounted on a vehicle 20. In the present embodiment, the tire management apparatus 10 manages the mounting state of tires having an embedded transmitter 31 onto the vehicle 20. Management of the mounting state onto the vehicle 20 includes registering and managing which position (wheel) of the vehicle 20 each tire with an embedded transmitter 31 is mounted on. The tires managed by the tire management apparatus 10 are not limited to a specific type; for example, they may be tires for passenger vehicles, large tires for trucks or buses, or Off the Road (OR) tires. The vehicle 20 is not limited to a specific vehicle type, but is described as a truck in the present embodiment. The truck may include types having dual wheels (double tires).

By embedding the transmitter 31 in the tire, individual identification of the tire becomes possible, and it is possible to manage the usage history of each tire, thereby appropriately performing, for example, durability determination of the base tire at the time of retreading. However, some or all of the tires mounted on the vehicle 20 may be replaced. Tire replacement includes not only replacement with new tires but also rotation, which is the exchange of positions among multiple tires mounted on the vehicle 20. When replacing a tire equipped with the transmitter 31, in order to obtain accurate information, it is necessary to update the identification information of the transmitter 31 attached to the replacement tire (work target tire) in association with the replacement position (new mounting position) on the vehicle 20. Conventionally, an operator performing tire replacement manually updates the association between the identification information of the transmitter 31 and the replacement position on the vehicle 20. However, in the conventional method, when targeting many vehicles 20 or vehicles 20 equipped with many tires, the operator's workload increases, and mistakes such as incorrect registration are likely to occur. As described below, the tire management apparatus 10 according to the present embodiment is equipped with a function to automatically determine the new mounting position of the work target tire, thereby supporting the operator's registration work and preventing registration errors.

The tire management apparatus 10 includes a communication interface 11, a memory 12, and a controller 13. The controller 13 includes an acquisition interface 131, a determination unit 132, and an output interface 133. The tire management apparatus 10 may be, for example, a computer as its hardware configuration. Details of the components of the tire management apparatus 10 will be described later.

In the present embodiment, the tire management apparatus 10 is a computer located at a place where tire repair and inspection, including replacement work, are performed (hereinafter referred to as a repair location). The computer is a portable computer device such as a smartphone or tablet terminal used by the operator in the present embodiment, but is not limited to a specific type. The tire management apparatus 10 may be provided in plural.

Here, a reader 70 is a device that reads transmitter ID information from the transmitter 31 attached to each tire. The transmitter ID information is unique identification information for each tire. The reader 70 also measures the signal reception strength when reading the transmitter ID information. The signal reception strength may be, for example, an RSSI (Received Signal Strength Indicator), but is not limited as long as it indicates the strength of the radio wave. In the present embodiment, the signal reception strength is expressed as a dimensionless numerical value, and the larger the value, the stronger the radio wave. The tire management apparatus 10 constitutes a tire management system together with at least the reader 70. The tire management apparatus 10 may further constitute a tire management system together with a server 60 connected via a network 40. The network 40 may be, for example, the Internet. The network 40 may also include, for example, a LAN (Local Area Network) in part of its configuration.

The server 60 is, for example, a computer separate from the tire management apparatus 10. The server 60 may be a data server that accumulates and manages information. The server 60 may aggregate the results of registration work performed by each of a plurality of tire management apparatuses 10, organize the management information of each tire into a database, and store it as tire management data. The tire management data includes the mounting state of the tires onto the vehicle 20. The tire management data may include the repair history of the tires and the running history of the vehicle 20 on which the tires are mounted. The running history may include, for example, information such as running distance, running speed, and acceleration/deceleration. The running history may be data obtained from various sensors mounted on the vehicle 20 or from an ECU (Electronic Control Unit) that controls the operation of the vehicle 20, and may be sent to the tire management apparatus 10 by registration by an operator at the repair location. The server 60 may also manage vehicle data, which is data relating to the vehicle 20 associated with each tire. The vehicle data may be configured as a database linked to information (vehicle identification information) for identifying each vehicle 20. The vehicle data includes at least information on the wheel configuration. The information on the wheel configuration may include, for example, the number of wheels of the vehicle 20, the number of axles, and the presence or absence of dual wheels (double tires).

The transmitter 31 is embedded in the tire. Embedding in the tire includes, for example, being embedded inside the tire and being affixed to the surface of the inner side of the tire. The transmitter 31 may be affixed to a surface other than the inner side of the tire as long as it is in a position where it is difficult to remove from the tire and is not affected by contact between the tire and the road surface. The transmitter 31 transmits a predetermined signal. The predetermined signal includes at least transmitter ID information, which is unique identification information for the transmitter 31. The predetermined signal may further include manufacturing information of the tire, such as the date and place of manufacture. The transmitter 31 may be an RFID tag as in the present embodiment, but is not limited to a specific type of device as long as it transmits a predetermined signal. The RFID tag performs short-range (several centimeters to several meters) wireless communication using electromagnetic fields or radio waves with a reader device, and exchanges information. In the present embodiment, the reader 70 is a reader device for RFID tags. Here, the transmitter 31 may be a passive type RFID tag, that is, a type that does not transmit data by itself but reflects radio waves from the reader device. There may be a plurality of transmitters 31 embedded in one tire, but in the present embodiment, it is assumed that there is one.

As illustrated in FIG. 2, a vehicle transmitter 31V may be embedded in the vehicle 20. The vehicle transmitter 31V transmits a signal including vehicle transmitter ID information, which is unique identification information for the vehicle transmitter 31V. The vehicle transmitter ID information is used as identification information for the vehicle 20. A reference transmitter 31S may also be provided at a specific position (for example, the rim) or in the vicinity of a specific position of the vehicle 20. The reference transmitter 31S transmits a signal including reference transmitter ID information, which is unique identification information for the reference transmitter 31S. The reader 70, like with the transmitter 31, can read signals transmitted from the vehicle transmitter 31V and the reference transmitter 31S.

Here, the tire management system is not limited to the configuration illustrated in FIG. 2. For example, the tire management system may have a configuration in which the tire management apparatus 10 is integrated (unified) with the server 60. For example, the tire management apparatus 10 may also serve as the server 60 and perform acquisition and management of all necessary information. That is, the tire management system may be configured with only the tire management apparatus 10 and the reader 70. The functions of the server 60 may be realized by a small computer device. The small computer device may include, for example, a mobile terminal such as a smartphone or tablet terminal.

Hereinafter, details of the components of the tire management apparatus 10 will be described. The communication interface 11 includes one or more communication modules for connecting to the network 40. The communication interface 11 may include, for example, a communication module compatible with mobile communication standards such as 4G (4th Generation) or 5G (5th Generation). The communication interface 11 may include, for example, a communication module compatible with wireless LAN standards (for example, IEEE802.11). The communication interface 11 may also include, for example, a communication module compatible with wired LAN standards.

The memory 12 is one or more memories. The memory may be, for example, a semiconductor memory, magnetic memory, or optical memory, but is not limited to these and may be any memory. The memory 12 may be built into the tire management apparatus 10, but may also be configured to be accessed externally by the tire management apparatus 10 via any interface.

The memory 12 stores various data used in various calculations executed by the controller 13. The memory 12 may also store results and intermediate data of various calculations executed by the controller 13. For example, the memory 12 may store tire management data and vehicle data acquired by the acquisition interface 131 from the server 60.

The controller 13 is one or more processors. The processor may be, for example, a general-purpose processor or a dedicated processor specialized for specific processing, but is not limited to these and may be any processor. The controller 13 controls the overall operation of the tire management apparatus 10.

Here, the tire management apparatus 10 may have the following software configuration. One or more programs used to control the operation of the tire management apparatus 10 are stored in the memory 12. When the program stored in the memory 12 is read by the processor of the controller 13, the processor functions as the acquisition interface 131, the determination unit 132, and the output interface 133.

The acquisition interface 131 acquires transmitter ID information read by the reader 70 and the signal reception strength at the time of reading the transmitter ID information. The acquisition interface 131 may acquire transmitter ID information read from the transmitter 31 embedded in the work target tire among the tires of the vehicle 20. In the present embodiment, it is described that replacement work is performed for all tires of the vehicle 20 and that all tires of the vehicle 20 are work target tires, but the work target tires may be only some of the tires of the vehicle 20. The acquisition interface 131 may also acquire the time at which the transmitter ID information was read.

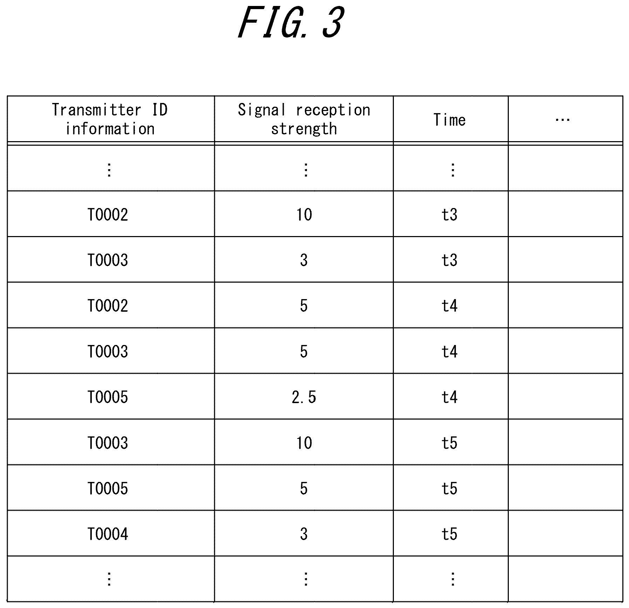

FIG. 3 is a diagram for explaining the transmitter ID information and signal reception strength. The reader 70 may read transmitter ID information at predetermined timings (for example, at fixed intervals). In the example of FIG. 3, for example, at time "t3," "T0002" is read as the transmitter ID information, and the signal reception strength at the time of reception is "10." At the same time "t3," "T0003" is also read as the transmitter ID information, and the signal reception strength at the time of reception is "3." Further, at a time "t4" after time "t3," "T0002" is read again as the transmitter ID information, and the signal reception strength at the time of reception has decreased to "5." The acquisition interface 131 acquires transmitter ID information and signal reception strength as illustrated in FIG. 3 from the reader 70. That is, the transmitter ID information and signal reception strength acquired by the acquisition interface 131 are plural, and are read by the reader 70 at different positions or at different times.

The acquisition interface 131 may further acquire vehicle transmitter ID information from the reader 70. The acquisition interface 131 may further acquire reference transmitter ID information and signal reception strength from the reader 70.

The acquisition interface 131 may also acquire vehicle data of the vehicle 20, including at least information on the wheel configuration. The acquisition interface 131 may acquire, for example, vehicle data of the vehicle 20, which is the work target specified (selected) based on vehicle identification information output from the output interface 133, from the server 60. In this case, the acquisition interface 131 may acquire the vehicle identification information. The vehicle identification information may be, for example, an image of the vehicle 20, identification information input by the operator, or vehicle transmitter ID information. The image of the vehicle 20 may be captured by a camera function provided in the tire management apparatus 10, and may particularly include the license plate of the vehicle 20. The identification information input by the operator may be, for example, the license plate number of the vehicle 20. By specifying and acquiring vehicle data using the vehicle identification information, the operator's work in acquiring vehicle data can be reduced.

The determination unit 132 determines the mounting position of the work target tire on the vehicle 20 based on the transmitter ID information and the signal reception strength. The determination unit 132 also generates mounting position information in which the transmitter ID information is associated with the mounting position. Here, the determination unit 132 determines the mounting position using a plurality of pieces of transmitter ID information and signal reception strengths read by the reader 70 at different positions or at different times. In order to obtain a plurality of pieces of transmitter ID information and signal reception strengths, it is sufficient that the transmitter ID information is read while changing the relative distance between the reader 70 and the transmitter 31.

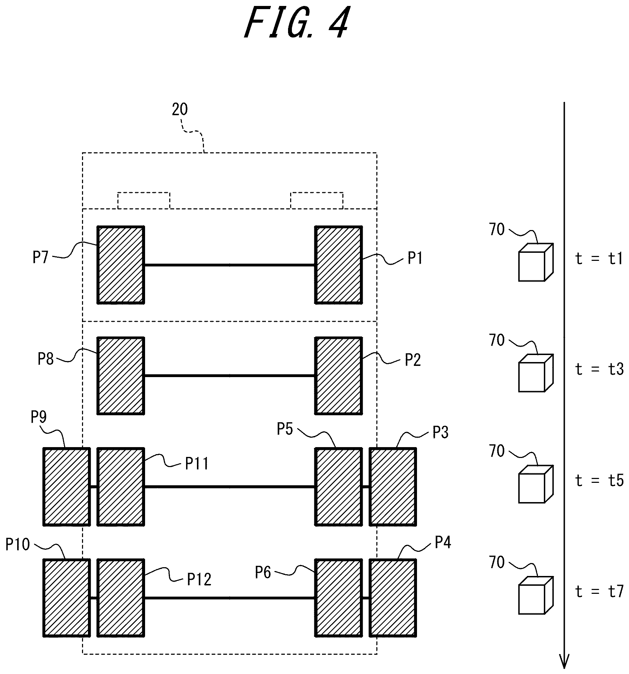

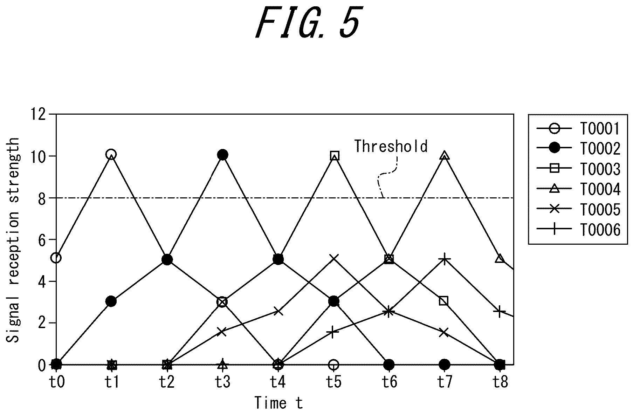

FIG. 4 is a diagram illustrating an example method in which the reader 70 reads transmitter ID information from the transmitter 31 at different positions or at different times. FIG. 5 is a diagram exemplifying changes in signal reception strength in the reading method of FIG. 4. For example, by the operator walking near one side surface of the vehicle 20 (the right side of the vehicle 20 in FIG. 4) while holding the reader 70, a plurality of pieces of transmitter ID information from the transmitter 31 can be read. In this case, the transmitter ID information is acquired at different positions at different times. In the example of FIG. 4, at time t = "t1," the reader 70 is near the front wheel at the foremost position, and as the operator moves the reader 70 toward the rear of the vehicle 20, at time "t7," the reader 70 is near the rear wheel at the rearmost position.

Here, the determination unit 132 can specify the positions of the wheels of the vehicle 20 based on the acquired information on the wheel configuration. The tire with the embedded transmitter 31 is mounted on one of the wheels, and the signal reception strength from the transmitter 31 increases near the mounting position. Therefore, the determination unit 132 can use a first determination method for determining the mounting position based on the time when the signal reception strength exceeds a threshold or reaches a maximum. Here, in a vehicle 20 having double tires, the signal reception strengths from the transmitters 31 of the tires mounted on the two wheels constituting the double tires increase simultaneously. Therefore, in order to distinguish between them, it is necessary to compare the magnitudes of the signal reception strengths. The determination unit 132 may use a second determination method for determining the mounting position by comparison of the maximum values of the signal reception strengths in addition to the first determination method. For example, the determination unit 132 may switch between the first determination method and the second determination method based on the information on the wheel configuration. In the example of FIG. 4, the determination unit 132 recognizes from the information on the wheel configuration that the vehicle 20 has double tires, and switches to the second determination method to determine the mounting position. By switching the determination method based on the information on the wheel configuration in this way, the determination unit 132 can automatically determine the mounting position of the work target tire even for a vehicle 20 having double tires. Here, when the vehicle 20 does not have double tires, the determination unit 132 can use the first determination method to determine the mounting position and reduce the computational load.

In the example of FIG. 4, the vehicle 20 has mounting positions P1 to P12. In the present embodiment, the determination unit 132 determines the mounting position after grasping the candidates for the mounting positions in advance based on the information on the wheel configuration. By the determination unit 132 grasping the candidates for the mounting positions in advance based on the vehicle data, the accuracy of automatic determination can be improved. As illustrated in FIG. 5, the signal reception strengths from the transmitters 31 with transmitter IDs T0001 to T0006 change according to time t. The transmitters 31 with transmitter IDs T0001 to T0006 are presumed to be embedded in the tires at mounting positions P1 to P6. In the example of FIG. 5, the tires mounted at mounting positions P7 to P12 are sufficiently distant from the position of the reader 70, and signals from the transmitters 31 of these tires are not received. In order to receive signals from the transmitters 31 embedded in the tires at mounting positions P7 to P12, for example, the operator may walk near the other side surface of the vehicle 20 (the left side of the vehicle 20 in FIG. 4) while holding the reader 70.

The determination unit 132 recognizes, based on the information on the wheel configuration, that the signal reception strength sequentially reaches a peak (maximum) at the mounting positions P1, P2, P3 and P5, and P4 and P6. In the example of FIG. 5, the transmitters 31 with transmitter IDs T0001, T0002, T0003 and T0005, and T0004 and T0006, respectively, indicate peaks in sequence. The determination unit 132 associates the appearance of these peaks and determines that the transmitter ID of the transmitter 31 of the tire at P1 is T0001. Further, the determination unit 132 determines that the transmitter ID of the transmitter 31 of the tire at P2 is T0002. For double tires, the determination unit 132 compares the magnitudes of the signal reception strengths as described above. That is, for transmitters 31 that simultaneously indicate peaks, the determination unit 132 determines that the one with the smaller signal reception strength is on the inner wheel side, and the one with the larger signal reception strength is on the outer wheel side. The determination unit 132 determines that the transmitter IDs of the transmitters 31 of the tires at P3 and P5 are T0003 and T0005, respectively. Further, the determination unit 132 determines that the transmitter IDs of the transmitters 31 of the tires at P4 and P6 are T0004 and T0006, respectively. Then, the determination unit 132 generates mounting position information in which the transmitter ID information is associated with the mounting position. Here, the determination unit 132 may simply determine the peak of the signal reception strength by comparison with a threshold value, rather than strictly determining it by, for example, time differentiation. In the example of FIG. 5, the determination unit 132 may treat the signal reception strength as a peak when it becomes "8" or more, with the threshold set to "8." Here, for the inner wheel of a double tire, a different threshold may be prepared.

The determination unit 132 may be provided with a verification function for the determination result. For example, when the number of pieces of transmitter ID information is greater than the number of wheels obtained from the information on the wheel configuration, the determination unit 132 may, based on the magnitude of the signal reception strength, not determine the mounting position for a portion of the transmitter ID information. Even if information is obtained from another transmitter 31 with a signal reception strength of 1 or less in the example of FIG. 5, the determination unit 132 may, considering that the number of wheels to be associated (six in the example of FIG. 5) is exceeded, not determine the mounting position. By means of such a verification function, the accuracy of automatic determination of the mounting position of the work target tire by the determination unit 132 can be further improved. Further, when the number of pieces of transmitter ID information is less than the number of wheels obtained from the information on the wheel configuration, the determination unit 132 may cause the output interface 133 to output a warning. The warning can prompt the operator to check early, thereby preventing registration errors.

Further, the determination unit 132 may verify the determined mounting position by comparing the signal reception strength of the work target tire with a reference signal reception strength. The reference signal reception strength is the signal reception strength when reading the reference transmitter ID information. As described above, the reference transmitter 31S is provided at or near a specific position of the vehicle 20. When the specific position is, for example, the rim of the wheel at P1, the reference signal reception strength and the signal reception strength from the transmitter 31 of the tire at P1 become almost the same. In this example, when the difference between the reference signal reception strength and the signal reception strength from the transmitter 31 of the tire at P1 is greater than a reference value, the determination unit 132 may regard the determination result as incorrect. The reference value may be a fixed value such as 5, or may be set according to the state of the communication environment. By performing verification by comparison with the reference signal reception strength, the accuracy of automatic determination of the mounting position of the work target tire by the determination unit 132 can be further improved. Here, the reference transmitter 31S may be provided outside the vehicle 20. For example, when the vehicle 20 is stopped and the specific position is P1, a measuring device including the reference transmitter 31S may be placed in the vicinity of P1 (on the road surface).

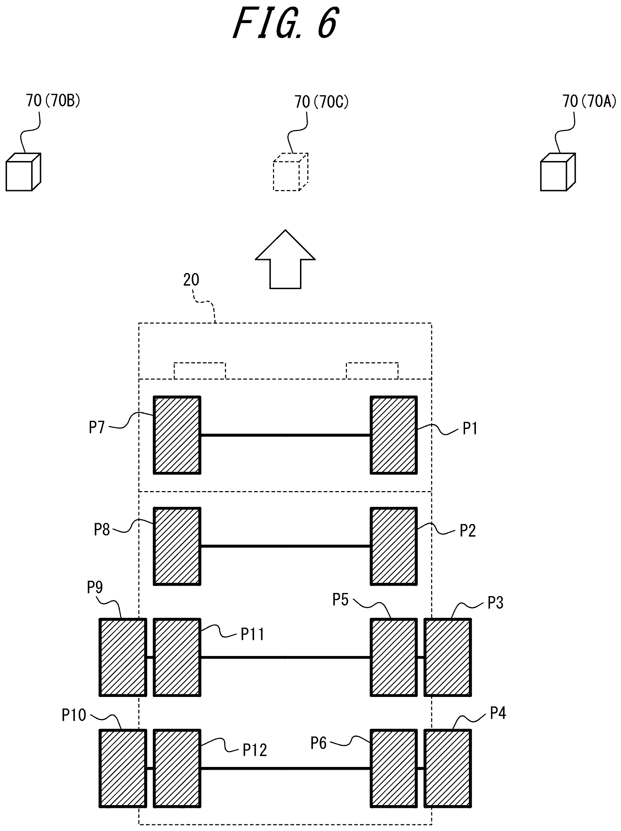

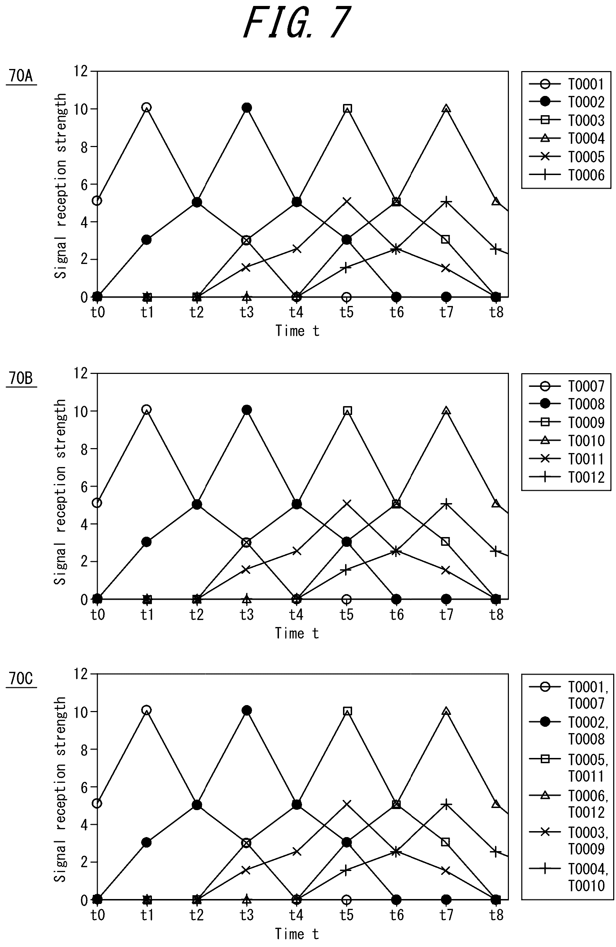

Here, the method by which the reader 70 reads the transmitter ID information from the transmitter 31 at different positions or at different times is not limited to the method in which the reader 70 moves as in FIG. 4. Further, the reader 70 is not limited to one, and may be plural. FIG. 6 is a diagram illustrating another method. FIG. 7 is a diagram exemplifying changes in signal reception strength in the reading method of FIG. 6. Three readers 70A, 70B, and 70C are fixed in a region in front of the vehicle 20, and the relative distance between the readers 70A, 70B, and 70C and the transmitter 31 changes as the vehicle 20 moves. By each of the three readers 70A, 70B, and 70C, a plurality of pieces of transmitter ID information and signal reception strengths are read at different times. As illustrated in FIG. 6, the reader 70A may be provided on one side surface of the vehicle 20 (the right side of the vehicle 20 in FIG. 6). The reader 70B may be provided on the other side surface of the vehicle 20 (the left side of the vehicle 20 in FIG. 6). The reader 70C may be, for example, embedded in the road surface and provided at a position corresponding to the vicinity of the center of the vehicle 20. The signal reception strengths read by each of the readers 70A, 70B, and 70C from the transmitter 31 change as in the graphs indicated as "70A," "70B," and "70C" in FIG. 7, respectively. The determination unit 132 can determine the mounting position in the same manner as the method of FIG. 4. In the method of FIG. 6, P1 to P6 as well as P7 to P12 can be determined simultaneously. Further, the determination unit 132 may verify the determination result by cross-checking the determination results based on the signal reception strengths of each of the readers 70A, 70B, and 70C.

The output interface 133 outputs the mounting position information generated by the determination unit 132. For example, the output interface 133 may automatically output the mounting position information to the server 60. In this case, the burden of registration work on the operator can be eliminated. Further, for example, the output interface 133 may display the mounting position information on a display of the tire management apparatus 10, such as a tablet terminal. The operator may check the association between the transmitter ID information and the mounting position, and, if there is no problem, may instruct the output interface 133 to output the mounting position information to the server 60. In this case, the burden of registration work on the operator can be greatly reduced. Further, when there is an output instruction for a warning from the determination unit 132 as described above, the output interface 133 may display the warning on a display of the tire management apparatus 10, such as a tablet terminal. The output interface 133 may also output vehicle identification information to the server 60.

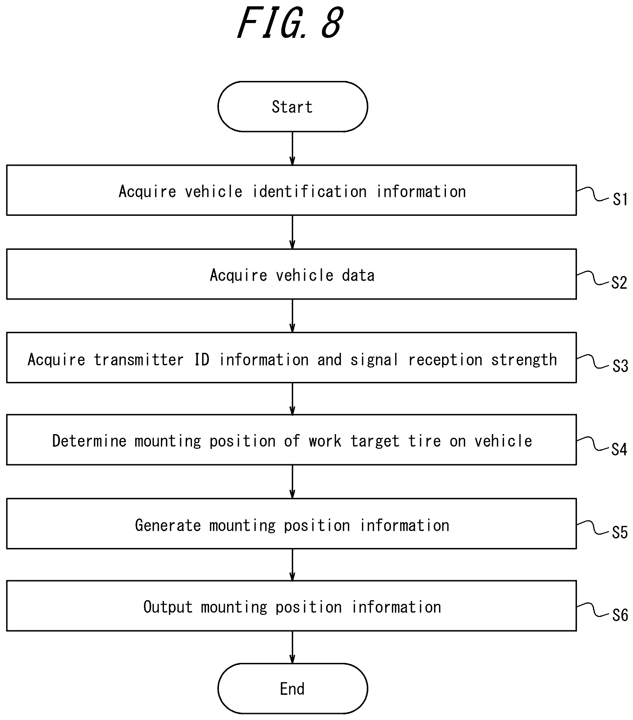

FIG. 8 is a flowchart exemplifying processing of a tire management method executed by the controller 13 of the tire management apparatus 10. The processing of the tire management method may be started, for example, at the timing when tire replacement work is performed.

The acquisition interface 131 acquires vehicle identification information (step S1). The vehicle data of the vehicle 20 that is the work target is specified based on the vehicle identification information. The output interface 133 outputs the vehicle identification information to the server 60. The server 60 may transmit the vehicle data of the vehicle 20 specified based on the vehicle identification information to the tire management apparatus 10.

The acquisition interface 131 acquires the vehicle data of the vehicle 20 (step S2). The determination unit 132, based on the information on the wheel configuration included in the vehicle data, grasps the candidates for the mounting positions before making a determination.

The acquisition interface 131 acquires the transmitter ID information and the signal reception strength from the reader 70 (step S3).

The determination unit 132 determines the mounting position of the work target tire on the vehicle 20 by the above method (step S4).

The determination unit 132 generates mounting position information in which the transmitter ID information is associated with the mounting position (step S5).

The output interface 133 outputs the mounting position information generated by the determination unit 132 to, for example, the server 60 (step S6). For example, the server 60 may update the tire management data with the mounting position information as new registration information.

As described above, the tire management apparatus 10, program, and tire management method according to the present embodiment, by the above configuration, enable efficient replacement work of tires with embedded transmitters 31 and can prevent registration errors.

The embodiments of the present disclosure have been described above with reference to the drawings and examples, but it should be noted that various modifications or alterations can be easily made based on the present disclosure by those skilled in the art. Therefore, it should be understood that such modifications or alterations are included within the scope of the present disclosure. For example, the functions included in each component or each step can be rearranged so as not to be logically inconsistent, and a plurality of components or steps can be combined into one or divided. The embodiments according to the present disclosure can also be realized as a program executed by a processor provided in the apparatus and as a storage medium recording the program. It should be understood that these are also included within the scope of the present disclosure.

### REFERENCE SIGNS LIST

- 10: Tire management apparatus
- 11: Communication interface
- 12: Memory
- 13: Controller
- 20: Vehicle
- 31: Transmitter
- 31S: Reference transmitter
- 31V: Vehicle transmitter
- 40: Network
- 60: Server
- 70, 70A, 70B, 70C: Reader
- 131: Acquisition interface
- 132: Determination unit
- 133: Output interface

## Claims

1. A tire management apparatus for managing a mounting state of tires having an embedded transmitter onto a vehicle, the tire management apparatus comprising:
an acquisition interface configured to acquire, via a reader, transmitter ID information read from the embedded transmitter in a work target tire, the work target tire being a target for work among the tires, and a signal reception strength at a time of reading the transmitter ID information;
a determination unit configured to determine a mounting position of the work target tire on the vehicle based on the transmitter ID information and the signal reception strength, and generate mounting position information in which the transmitter ID information is associated with the mounting position; and
an output interface configured to output the mounting position information,
wherein a plurality of pieces of the transmitter ID information and a plurality of the signal reception strengths are acquired and are read at different positions or at different times by the reader.

2. The tire management apparatus according to claim 1, wherein the acquisition interface acquires vehicle data relating to the vehicle and including at least information on a wheel configuration, and
wherein the determination unit determines the mounting position of the work target tire based on the information on the wheel configuration.

3. The tire management apparatus according to claim 2, wherein the determination unit switches, based on the information on the wheel configuration, between a first determination method for determining the mounting position based on a time when the signal reception strength exceeds a threshold or reaches a maximum, and a second determination method for determining the mounting position by comparison of maximum values of the signal reception strength in addition to the first determination method.

4. The tire management apparatus according to claim 2 or 3, wherein in a case in which the number of the pieces of the transmitter ID information is greater than the number of wheels obtained from the information on the wheel configuration, the determination unit does not determine the mounting position for a portion of the pieces of the transmitter ID information based on a magnitude of the signal reception strength.

5. The tire management apparatus according to any one of claims 2 to 4, wherein in a case in which the number of the pieces of the transmitter ID information is less than the number of wheels obtained from the information on the wheel configuration, the determination unit causes the output interface to output a warning.

6. The tire management apparatus according to any one of claims 2 to 5, wherein the vehicle data, acquired by the acquisition interface, for the vehicle is specified based on a captured image of the vehicle, identification information input by an operator, or vehicle transmitter ID information read from a vehicle transmitter embedded in the vehicle.

7. The tire management apparatus according to any one of claims 1 to 6, wherein the acquisition interface acquires reference transmitter ID information read from a reference transmitter provided at a specific position of the vehicle or near the specific position, and a reference signal reception strength at a time of reading the reference transmitter ID information, and
wherein the determination unit verifies the determined mounting position by comparing the signal reception strength of the work target tire and the reference signal reception strength.

8. A program configured to cause a tire management apparatus, which manages a mounting state of tires having an embedded transmitter onto a vehicle, to execute:
acquiring, via a reader, transmitter ID information read from the embedded transmitter in a work target tire, the work target tire being a target for work among the tires, and a signal reception strength at a time of reading the transmitter ID information;
determining a mounting position of the work target tire on the vehicle based on the transmitter ID information and the signal reception strength, and generating mounting position information in which the transmitter ID information is associated with the mounting position; and
outputting the mounting position information,
wherein a plurality of pieces of the transmitter ID information and a plurality of the signal reception strengths are acquired and are read at different positions or at different times by the reader.

9. A tire management method for managing a mounting state of tires having an embedded transmitter onto a vehicle, the tire management method comprising:
acquiring, via a reader, transmitter ID information read from the embedded transmitter in a work target tire, the work target tire being a target for work among the tires, and a signal reception strength at a time of reading the transmitter ID information;
determining a mounting position of the work target tire on the vehicle based on the transmitter ID information and the signal reception strength, and generating mounting position information in which the transmitter ID information is associated with the mounting position; and
outputting the mounting position information,
wherein a plurality of pieces of the transmitter ID information and a plurality of the signal reception strengths are acquired and are read at different positions or at different times by the reader.
